# EUROPEAN PATENT APPLICATION

(11) **EP 4 503 539 A1**
(43) Date of publication of application: **05.02.2025**
(21) Application number: 23188990.8
(22) Date of filing: 01.08.2023
(51) Int. Cl.: H04L 41/084, H04L 41/0853, H04L 41/0866, H04L 41/08

(54) **NETWORK SWITCH CONFIGURATION IN INDUSTRIAL AUTOMATION SYSTEMS**

(71) Applicant: ABB SCHWEIZ AG, 5400 Baden (CH)
(72) Inventor: POOK, Stefan, 32423 Minden (DE); KEUL, Thomas, 63579 Freigericht (DE); JESKE, Ralf, 32469 Petershagen (DE); WAHLMANN, Andreas, 31715 Meerbeck (DE); SHI, Huan, Shangcheng District, Hangzhou 310000 (CN); HONG, TingTing, Shangcheng District, Hangzhou 310000 (CN)
(74) Representative: Maiwald GmbH

(57) **Abstract**

There is provided a network device (102-108) for an automation system. The network device comprises a network switch, wherein the network device is configured to access non-volatile storage (116) to which the network device is communicatively coupled to obtain provisioning data for the network switch, wherein the provisioning data comprises data enabling the network device to obtain at least a baseline configuration for the network switch. Further provided is the non-volatile storage (116) storing provisioning data for the network switch, wherein the provisioning data comprises data enabling the network device (102-108) comprising the network switch to obtain the at least baseline configuration for the network switch.

## Description

### FIELD OF THE INVENTION

The invention relates to apparatus and methods for facilitating automatic network switch configuration in industrial automation systems.

### BACKGROUND

In the field of industrial automation, the tendency is for ethernet-based communication to become the standard mode for interconnecting components such as engineering tools, operator interfaces and controllers. Nonetheless, depending on their usage, network switches may need to be configured to separate communications between ethernet based and non-ethernet based parts of the network. Network switches are typically configured manually. Manual switch configuration approach is error prone, time-consuming, and vulnerable to compatibility issues. Network switches may be implemented as standalone units or they may be integrated into other components. In the case that a network switch is integrated into another component, additional physical constraints may have to be configured, concerning for example a physical layer configuration or a multiplexer that is necessary to make contact with other network nodes. Consequently, the proper configuration of network switches assumes increased importance in ensuring availability of these critical components of the process control system.

### SUMMARY

It would therefore be advantageous to automate the network switch configuration process as far as possible. According to a first aspect of invention, there is provided a network device for an automation system, the network device comprising a network switch, wherein the network device is configured to access non-volatile storage to which the network device is communicatively coupled to obtain provisioning data for the network switch, wherein the provisioning data comprises data enabling the network device to obtain at least a baseline configuration for the network switch.

According to a second aspect, there is provided non-volatile storage storing provisioning data for a network switch, wherein the provisioning data comprises data enabling a network device comprising the network switch to obtain at least a baseline configuration for the network switch.

According to a third aspect, there is provided a mounting termination unit for an automation system, the mounting termination unit comprising the non-volatile storage of the second aspect.

According to a fourth aspect, there is provided a replaceable storage device which is communicatively couplable to the network device of the first aspect, the replaceable storage device comprising the non-volatile storage of the second aspect. The replaceable storage device may comprise for example a USB stick, an SD card or the like.

In any of the aspects described herein, the provisioning data may be stored in the non-volatile storage in encrypted form and the network device may be configured to decrypt the encrypted provisioning data for use by the network switch.

In any of the aspects described herein, the provisioning data may be CPU-agnostic and usable by different hardware revisions. That is, the provisioning data may not be specific to any particular CPU or hardware revision, such that it may be used by a variety of network devices regardless of their internal implementation.

According to a fifth aspect, there is provided a process control system comprising one or more of the network device of the first aspect, the non-volatile storage of the second aspect, the mounting termination unit of the third aspect, and the replaceable storage device of the fourth aspect. There is also provided an automation system comprising the process control system of the fifth aspect.

According to a sixth aspect, there is provided an automatic switch configuration method, the method comprising:
storing provisioning data for a network switch in non-volatile storage, wherein the provisioning data comprises data enabling a network device comprising a network switch to obtain at least a baseline configuration for the network switch;
accessing, by the network device, the provisioning data stored in the non-volatile storage following mounting of the network device to a mounting termination unit;
using the provisioning data to obtain the baseline configuration for the network switch; and
configuring the network switch using the obtained baseline configuration.

The mounting of the network device to the mounting termination unit may occur in the case that the network device is used to replace a previously-mounted network device which has malfunctioned, wherein the provisioning data which is used to configure the network switch of the newly-mounted network device was also used to configure a network switch of the previously-mounted network device.

The method may further comprise verifying the baseline configuration against a reference configuration. The reference configuration may be stored on an engineering server. After the network switch has been configured, the controller is able to fetch data from the engineering server. The reference configuration may comprise user-amendments to the configuration data. In case the user has changed any configuration data, the consistency check provided by the verification will reveal this.

The provisioning data may provide direct or indirect access to the configuration data. More particularly, the step of using the provisioning data to obtain the baseline configuration for the network switch may comprise retrieving the baseline configuration from the non-volatile storage where it is stored as at least part of the provisioning data, i.e., directly. In that case, retrieving the baseline configuration from the non-volatile storage may comprise accessing the non-volatile storage via a redundant bus, to ensure availability of the configuration data in the event of component malfunction. Additionally to, or alternatively to, the direct retrieval of the configuration data, the step of using the provisioning data to obtain the baseline configuration may comprise retrieving the baseline configuration from a remote location indicated by the provisioning data, i.e., indirectly.

In any of the aspects described herein, the non-volatile memory in which the provisioning data is stored may form part of a redundant partner mounted to the same mounting termination unit as the network device. Use of redundant partners in this way ensures availability of the configuration data in the event of component malfunction.

Any of the methods described herein may be computer-implemented. Any of the methods may form part of a method of producing a product using an industrial automation system that comprises the network switch configured in the manner described herein.

According to a seventh aspect, there is provided a computing system configured to perform the method of the sixth aspect.

According to an eighth aspect, there is provided a computer program (product) comprising instructions which, when executed by a computing system, enable or cause the computing system to perform the method of the sixth aspect.

According to a ninth aspect, there is provided a computer-readable (storage) medium comprising instructions which, when executed by a computing system, enable or cause the computing system to perform the method of the sixth aspect. The computer-readable medium may be transitory or non-transitory, volatile or non-volatile.

The invention may include one or more aspects, examples or features in isolation or combination whether specifically disclosed in that combination or in isolation. Any optional feature or sub-aspect of one of the above aspects applies as appropriate to any of the other aspects.

The key benefits of the automatic network switch configuration approach described herein are that:-
- the operator interactions required to start up a newly-installed network device are limited to a bare minimum. After configuring the network switch using the baseline configuration, the newly-installed network device is able to retrieve further configuration data over the network.
- Other components which may rely on a failing network switch are immediately able to communicate again after replacement. The need to set up the newly-installed network switch via a service interface is obviated.

By "(process) automation system" is meant an industrial plant or production plant comprising one or more pipelines, production lines, and/or assembly lines for transforming one or more educts into a product and/or for assembling one or more components into a final product.

The term "configuration data" or "configuration" as used herein refers to data which is used to configure a network switch so as to enable the network switch to access the network and/or use network equipment. The configuration data may thus be described as "network switch configuration data" or simply "network configuration data".

The term "provisioning data" is used herein to refer to configuration data per se and/or to data whereby configuration data can be obtained. Thus, the provisioning data may enable a network device to obtain configuration data by either containing configuration data itself or by providing an indication as to where or how configuration data can be found. In other words, the provisioning data may provide either direct or indirect access to configuration data. Direct access means that configuration data is available at the non-volatile storage, whereas indirect access means that configuration data is stored at a location remote to the non-volatile storage, for example on an engineering server, in which case the non-volatile storage stores a pointer, link, address, redirect, or other indication of a location, e.g., a remote location, where configuration data is stored and from where it may be retrieved.

By "storing" provisioning data is meant the act of writing the provisioning data to storage and/or the act of maintaining the already-written provisioning data in storage.

By "redundant" is meant that the component in question represents one of two or more identical or similar components which are included to ensure availability in the case that one of them malfunctions.

The term "obtaining", as used herein, may comprise, for example, receiving from another system, device, or process; receiving via an interaction with a user; loading or retrieving from storage or memory; measuring or capturing using sensors or other data acquisition devices.

The term "determining", as used herein, encompasses a wide variety of actions, and may comprise, for example, calculating, computing, processing, deriving, investigating, looking up (e.g., looking up in a table, a database or another data structure), ascertaining, and the like. Also, "determining" may comprise receiving (e.g., receiving information), accessing (e.g., accessing data in a memory), and the like. Also, "determining" may comprise resolving, selecting, choosing, establishing and the like.

The indefinite article "a" or "an" does not exclude a plurality. In addition, the articles "a" and "an" as used herein should generally be construed to mean "one or more" unless specified otherwise or clear from the context to be directed to a singular form.

Unless specified otherwise, or clear from the context, the phrases "one or more of A, B and C", "at least one of A, B, and C", and "A, B and/or C" as used herein are intended to mean all possible permutations of one or more of the listed items. That is, the phrase "A and/or B" means (A), (B), or (A and B), while the phrase "A, B, and/or C" means (A), (B), (C), (A and B), (A and C), (B and C), or (A, B, and C).

The term "comprising" does not exclude other elements or steps. Furthermore, the terms "comprising", "including", "having" and the like may be used interchangeably herein.

### BRIEF DESCRIPTION OF THE DRAWINGS

A detailed description will now be given, by way of example only, with reference to the accompanying drawings, in which:-
FIG. 1 illustrates a process control system;
FIG. 2 schematically illustrates components of the process control system of FIG. 1 in situ; and
FIG. 3 illustrates a computing system that can be used in accordance with the systems and methods disclosed herein.

### DETAILED DESCRIPTION

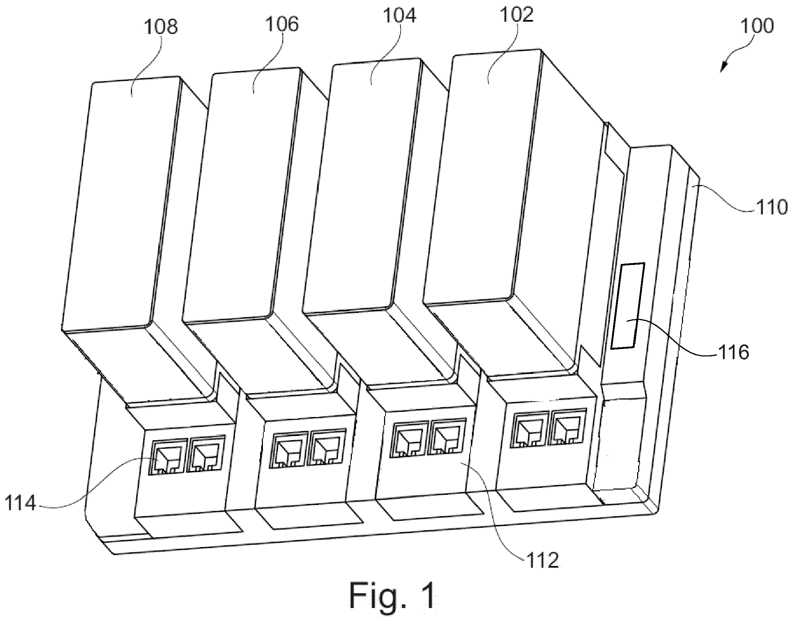

FIG. 1 illustrates a process control system 100 for controlling an industrial process carried out by an automation system (not shown). The process control system 100 comprises several different hardware units 102-108 physically and communicatively coupled to one another via a mounting termination unit (MTU) 110, commonly known as a backplane. The units illustrated in FIG. 1 include a standalone controller 102, a standalone fieldbus adapter 104 of a first type, a standalone fieldbus adapter 106 of a second type, and a controller 108 comprising an integrated fieldbus adapter. Each controller 102, 108 communicates with other components of the automation system, such as the engineering tool 200 described herein, over a control network. To that end, each controller 102, 108 is provided with network interfaces, such as that illustrated at 114, for communication via at least one ethernet-based fieldbus.

The mounting termination unit (MTU) 110 comprises a number of slots 112 for accommodating the units 102-108. Each unit 102-108 can be detachably connected to the mounting termination unit 110 via the corresponding slot 112. The mounting termination unit 110 further comprises non-volatile storage 116 for storing data that may be accessed by the units 102-108. The mounting termination unit 110 may further comprise circuitry (not shown) for powering the units and/or for accommodating a power module.

Each controller 102, 108 is configured to control a respective process carried out by the automation system (not shown). The process control system 100 may find application in any field of industry where process automation is desired, such as energy, oil and gas, chemical, petrochemical, and so on. The controller 102, 108 handles process control and monitoring for the automation system by receiving input signals from sensors and instruments, and outputting control signals for controlling plant equipment such as pumps, valves, conveyors, mixers, and heaters. Any such sensor, instrument or plant equipment may form part of one or more of the field devices 202 described herein. The controller 102, 108 is configured to execute a process control application to generate the control signals on the basis of the input signals. The control application may comprise control logic instructing the controller 102, 108 how to respond to all input signals with appropriate control signals to maintain normal functioning of the process. In one non-limiting example, the control application conforms to the international standard IEC 61131.

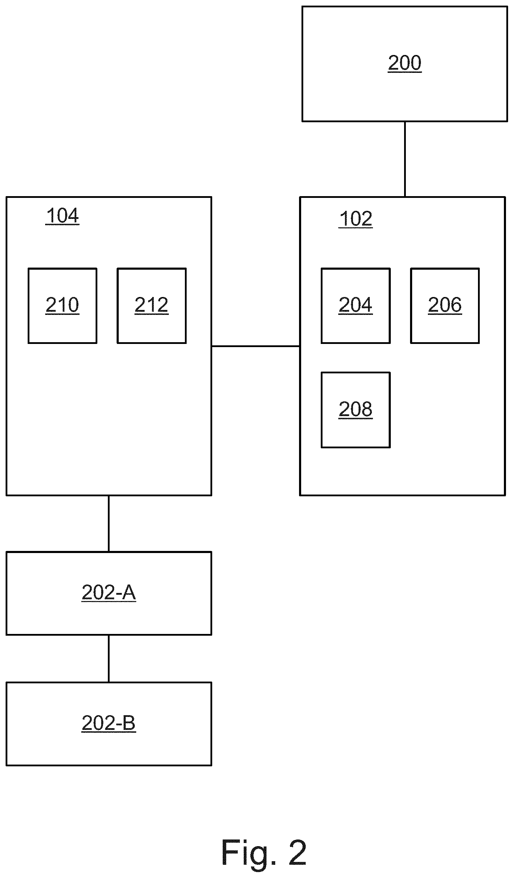

FIG. 2 schematically illustrates the process control system 100 in situ, that is, in communication with the engineering tool 200 and with one or more field devices 202, which in the non-limiting example depicted in the figure include field device 202-A and field device 202-B. For convenience, only the controller 102 and the adapter 104 are illustrated in FIG. 2.

The engineering tool 200 (typically implemented as a software package) is used to create configuration data for the process control system 100, which can be downloaded to the controller 102.

The controller 102 comprises logic circuitry 204 configured to execute the control application. The logic circuitry 204 may comprise a CPU, MCU, SoC, FPGA, DSP, and/or an Al-engine, together with any memory to be used in the processing of signals. The logic circuitry 204 may be further configured to perform any one or more of the other operations described herein.

The controller 102 further comprises a communications interface 206 for handling communications between the logic circuitry 204 and the fieldbus adapter 104.

The controller 102 further comprises power down circuitry 208 for handling power down sequencing in case of power loss.

The fieldbus adapter 104 comprises a fieldbus communications interface (FCI) 210 for interfacing with the field devices 202 over a communications network in the form of a fieldbus. The adapter 104 further comprises non-volatile storage 212 storing data including an identifier of the adapter 104, such as its serial number.

The process control system 100 comprises a network switch whereby at least one of the controllers 102, 108 is able to communicate via the at least one ethernet-based fieldbus. In one example, one or both of the controllers 102, 108 comprises a network switch but it will appreciated that a network switch may equivalently be housed by any MTU-mountable module, such as an adapter 104, 106 or a separate switch module.

For brevity, the module which comprises the network switch is referred to hereinafter as a network device 102-108.

The network switch requires a set of configuration data, which may comprise one or more of :-
- at least one IP address;
- at least one MAC address;
- VLAN information;
- routing information for at least one port;
- routing information for at least one hardware multiplexer;
- PHY (physical layer) configuration.

Typically, the set of configuration data is composed in the engineering tool 200 and downloaded to the network device 102-108 when the latter is deployed during plant commissioning or subsequently during plant operation when used to replace a preexisting network device. This manual switch configuration approach is error prone, time-consuming, and vulnerable to compatibility issues.

The present disclosure thus provides apparatus and methods for facilitating automation switch configuration. According to the present disclosure, the mounting termination unit 110 is provided with non-volatile storage 116 storing provisioning data whereby the set of configuration data can be obtained by the network device 102-108.

In one example, the provisioning data comprises the set of configuration data in its entirety. In another example, the provisioning data comprises an indication of a network location at which the set of configuration data can be obtained. In yet another example, the provisioning data comprises at least part of the set of configuration data together with an indication of a network location at which the remainder of the set of configuration data can be obtained. The network location at which the set of configuration data may be at least partially obtained may correspond to the engineering tool or an engineering server. It will be understood that the provisioning data may comprise, or point to, only that configuration data which is necessary for a rudimentary network connection to be established, i.e., a baseline configuration, which can be supplemented with non-essential configuration data following establishment of the rudimentary network connection. In one non-limiting example, the baseline configuration comprises data specifying a physical port which is usable to receive further configuration data from an external source, for example an engineering server.

The provisioning data is stored in the non-volatile storage 116 of the mounting termination unit 110 in a predetermined or standardized format. In this way, the provisioning data may be stored in a hardware-agnostic manner for retrieval and use by a variety of network devices 102-108.

The network device 102-108 is configured to retrieve the provisioning data from the non-volatile storage 116 subsequent to the mounting of the network device 102-108 to the mounting termination unit 110.

The network device 102-108 may be configured to obtain an identifier of the mounting termination unit 110 following its mounting, for example its serial number, based on which a determination can be made that the mounting termination unit 110 is of a type that comprises the non-volatile storage 116 storing the provisioning data.

In use, when the network device 102-108 is mounted to the mounting termination unit 110, i.e., physically installed, the provisioning data is loaded into the network device 102-108 under the control of a processor, which in this example forms part of the network device. The configuration data may then be obtained in one of the ways described herein and stored in non-volatile storage in the network device 102-108. The apparatus and methods disclosed herein thus facilitate the automatic configuration of network switches, that is, using minimal operator involvement, in a move towards zero-touch provisioning.

Any unit, module, circuitry or methodology described herein may be implemented using hardware, software, and/or firmware configured to perform any of the operations described herein. Hardware may comprise one or more processor cores, field-programmable gate arrays (FPGAs), application-specific integrated circuits (ASICs), application-specific standard products (ASSPs), system-on-a-chip systems (SOCs), complex programmable logic devices (CPLDs), etc. Software may be embodied as a software package, code, instructions, instruction sets and/or data recorded on at least one transitory or non-transitory computer readable storage medium. Firmware may be embodied as code, instructions or instruction sets and/or data hard-coded in memory devices (e.g., non-volatile memory devices).

If implemented in software, the functions can be stored on or transmitted over as one or more instructions or code on a computer-readable medium. Computer-readable media include computer-readable storage media. Computer-readable storage media can be any available storage media that can be accessed by a computer. By way of example, and not limitation, such computer-readable storage media can comprise FLASH storage media, RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Disk and disc, as used herein, include compact disc (CD), laser disc, optical disc, digital versatile disc (DVD), floppy disk, and Blu-ray disc (BD), where disks usually reproduce data magnetically and discs usually reproduce data optically with lasers. Further, a propagated signal may be included within the scope of computer-readable storage media. Computer-readable media also includes communications media including any medium that facilitates transfer of a computer program from one place to another. A connection, for instance, can be a communications medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio and microwave are included in the definition of communications medium. Combinations of the above should also be included within the scope of computer-readable media.

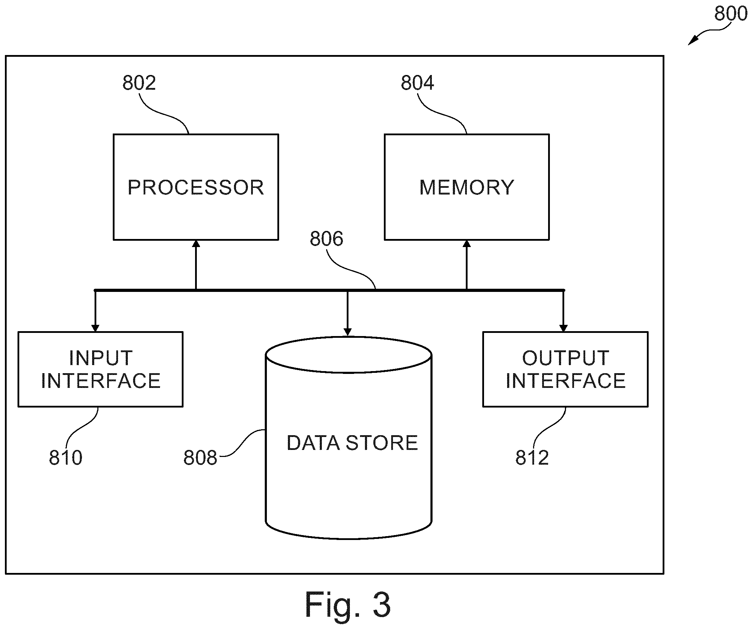

FIG. 3 illustrates an exemplary computing system 800 that can be used in accordance with the systems and methods disclosed herein. The computing system 800 may form part of or comprise any desktop, laptop, server, or cloud-based computing system. The computing system 800 includes at least one processor 802 that executes instructions that are stored in a memory 804. The instructions may be, for instance, instructions for implementing functionality described as being carried out by one or more components described herein or instructions for implementing one or more of the methods described herein. The processor 802 may access the memory 804 by way of a system bus 806. In addition to storing executable instructions, the memory 804 may also store conversational inputs, scores assigned to the conversational inputs, etc.

The computing system 800 additionally includes a data store 808 that is accessible by the processor 802 by way of the system bus 806. The data store 808 may include executable instructions, log data, etc. The computing system 800 also includes an input interface 810 that allows external devices to communicate with the computing system 800. For instance, the input interface 810 may be used to receive instructions from an external computer device, from a user, etc. The computing system 800 also includes an output interface 812 that interfaces the computing system 800 with one or more external devices. For example, the computing system 800 may display text, images, etc. by way of the output interface 812.

It is contemplated that the external devices that communicate with the computing system 800 via the input interface 810 and the output interface 812 can be included in an environment that provides substantially any type of user interface with which a user can interact. Examples of user interface types include graphical user interfaces, natural user interfaces, and so forth. For instance, a graphical user interface may accept input from a user employing input device(s) such as a keyboard, mouse, remote control, or the like and provide output on an output device such as a display. Further, a natural user interface may enable a user to interact with the computing system 800 in a manner free from constraints imposed by input device such as keyboards, mice, remote controls, and the like. Rather, a natural user interface can rely on speech recognition, touch and stylus recognition, gesture recognition both on screen and adjacent to the screen, air gestures, head and eye tracking, voice and speech, vision, touch, gestures, machine intelligence, and so forth.

Additionally, while illustrated as a single system, it is to be understood that the computing system 800 may be a distributed system. Thus, for instance, several devices may be in communication by way of a network connection and may collectively perform tasks described as being performed by the computing system 800.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein, and without limitation to the scope of the claims. The applicant indicates that aspects of the present invention may consist of any such individual feature or combination of features.

It has to be noted that embodiments of the invention are described with reference to different categories. In particular, some examples are described with reference to methods whereas others are described with reference to apparatus. However, a person skilled in the art will gather from the description that, unless otherwise notified, in addition to any combination of features belonging to one category, also any combination between features relating to different category is considered to be disclosed by this application. However, all features can be combined to provide synergetic effects that are more than the simple summation of the features.

While the invention has been illustrated and described in detail in the drawings and foregoing description, such illustration and description are to be considered exemplary and not restrictive. The invention is not limited to the disclosed embodiments. Other variations to the disclosed embodiments can be understood and effected by those skilled in the art, from a study of the drawings, the disclosure, and the appended claims.

The mere fact that certain measures are recited in mutually different dependent claims does not indicate that a combination of these measures cannot be used advantageously.

Any reference signs in the claims should not be construed as limiting the scope.

## Claims

1. A network device (102-108) for an automation system, the network device comprising a network switch, wherein the network device is configured to access non-volatile storage (116) to which the network device is communicatively coupled to obtain provisioning data for the network switch, wherein the provisioning data comprises data enabling the network device to obtain at least a baseline configuration for the network switch.

2. Non-volatile storage (116) storing provisioning data for a network switch, wherein the provisioning data comprises data enabling a network device (102-108) comprising the network switch to obtain at least a baseline configuration for the network switch.

3. A mounting termination unit (110) for an automation system, the mounting termination unit comprising the non-volatile storage (116) of claim 2.

4. A replaceable storage device which is communicatively couplable to the network device of claim 1, the replaceable storage device comprising the non-volatile storage (116) of claim 2.

5. The network device of claim 1, or the non-volatile storage of claim 2, wherein the provisioning data is stored in the non-volatile storage in encrypted form, and wherein the network device is configured to decrypt the encrypted provisioning data for use by the network switch.

6. The network device of claim 1, or the non-volatile storage of claim 2, wherein the provisioning data is CPU-agnostic and usable by different hardware revisions.

7. An automatic switch configuration method, the method comprising:
storing provisioning data for a network switch in non-volatile storage (116), wherein the provisioning data comprises data enabling a network device (102-108) comprising a network switch to obtain at least a baseline configuration for the network switch;
accessing, by the network device, the provisioning data stored in the non-volatile storage following mounting of the network device to a mounting termination unit (110);
using the provisioning data to obtain the baseline configuration for the network switch; and
configuring the network switch using the obtained baseline configuration.

8. The method of claim 7, wherein the mounting of the network device (102-108) to the mounting termination unit (110) occurs in the case that the network device is used to replace a previously-mounted network device which has malfunctioned, wherein the provisioning data which is used to configure the network switch of the newly-mounted network device was also used to configure a network switch of the previously-mounted network device.

9. The method of claim 7 or 8, further comprising verifying the baseline configuration against a reference configuration.

10. The method of any of claims 7-9, wherein using the provisioning data to obtain the baseline configuration for the network switch comprises retrieving the baseline configuration from the non-volatile storage (116).

11. The method of claim 10, wherein retrieving the baseline configuration from the non-volatile storage (116) comprises accessing the non-volatile storage via a redundant bus.

12. The method of claim 9 or 10, wherein using the provisioning data to obtain the baseline configuration comprises retrieving the baseline configuration from a remote location indicated by the provisioning data.

13. The method of any of claims 7-12, wherein the non-volatile memory (116) in which the provisioning data is stored forms part of a redundant partner mounted to the same mounting termination unit (110) as the network device (102-108).

14. A computer-readable medium (804, 808) comprising instructions which, when executed by a computing system (800), cause the computing system to perform the method of any of claims 7-13.
